# EUROPÄISCHE PATENTSCHRIFT

(11) **EP 4 454 454 B1**
(45) Veröffentlichungstag und Bekanntmachung des Hinweises auf die Patenterteilung: **08.04.2026**
(21) Anmeldenummer: 24157259.3
(22) Anmeldetag: 13.02.2024
(51) Int. Cl.: A01D 67/00, B62D 21/00, F01N 3/20, A01D 41/02

(54) **LANDWIRTSCHAFTLICHE ARBEITSMASCHINE**
AGRICULTURAL MACHINE
MACHINE AGRICOLE

(30) Priorität: 24.04.2023 DE 102023110350
(43) Veröffentlichungstag der Anmeldung: 30.10.2024
(73) Patentinhaber: CLAAS Selbstfahrende Erntemaschinen GmbH, 33428 Harsewinkel (DE)
(72) Erfinder: Hohlfeld, Markus, 33428 Harsewinkel (DE); Schnitger, Günter, 49163 Hunteburg (DE)
(74) Vertreter: CLAAS Gruppe

(56) Entgegenhaltungen:
- EP-A1- 2 949 496
- FR-A1- 2 707 237
- JP-A- S63 162 329
- US-A- 3 396 983
- US-B2- 10 821 943

## Beschreibung

Die Erfindung betrifft eine landwirtschaftliche Arbeitsmaschine gemäß dem Oberbegriff des Anspruchs 1.

Ein Fahrzeug mit einen in der Seitenwand eines Kotflügels angeordneten Tank für verdampften Kraftstoff ist aus der JP S63-162329 A bekannt.

Eine als Feldhäcksler ausgeführte landwirtschaftliche Arbeitsmaschine ist aus der EP 1 518 453 B2 bekannt. Die EP 1 518 453 B2 schlägt eine sich in die Karosserie der landwirtschaftlichen Arbeitsmaschine bauraumsparend einfügende Speichervorrichtung zur Aufnahme von Flüssigkeiten oder Gegenständen vor. Eine derartige Speichervorrichtung kann beispielsweise untenseitig an dem Feldhäcksler angeordnet sein oder in bereits vorhandene Strukturen, insbesondere Karosserieteile, integriert werden.

Nachteilig ist, dass in den bereits vorhandenen Strukturen aufgrund einer Vielzahl erforderlicher Arbeitsorgane kaum Bauraum zur Anordnung einer Speichervorrichtung zur Verfügung steht und eine Anordnung einer Speichervorrichtung außenseitig an dem Feldhäcksler zu einer gesamtheitlichen Vergrößerung des Aufbaus des Feldhäckslers führt. Beispielsweise geht eine reduzierte Bodenfreiheit des Feldhäckslers mit einer Anordnung der Speichervorrichtung untenseitig an dem Feldhäcksler einher.

Es ist deshalb Aufgabe der Erfindung, die beschriebenen Nachteile des Standes der Technik zu vermeiden und insbesondere den Stauraum für eine Funktionsbaugruppe an einer landwirtschaftlichen Arbeitsmaschine zu erweitern, ohne dass sich der gesamtheitliche Aufbau der Arbeitsmaschine vergrößert.

Diese Aufgabe wird erfindungsgemäß durch die kennzeichnenden Merkmale des Anspruchs 1 gelöst.

Gemäß dem Anspruch 1 wird eine landwirtschaftliche Arbeitsmaschine, insbesondere Feldhäcksler, vorgeschlagen, umfassend einen Achskörper mit zumindest einen an dem Achskörper angeordneten Bodeneingriffsmittel, weiterhin umfassend einen Radkasten der einen das Bodeneingriffsmittel radial außenseitig abschnittsweise umgebenden Kotflügel und eine Seitenwand umfasst, wobei an der Seitenwand ein Stauraum mit einer darin befindlichen Funktionsbaugruppe angeordnet ist.

Die Erfindung hat viele Vorteile. Die Nutzung des in dem Radkasten vorhandenen Bauraums ermöglicht es ohne eine Vergrößerung der gesamtheitlichen Struktur der Arbeitsmaschine weiteren Stauraum bereitzustellen. Weiterhin ist eine in dem Radkasten angeordnete Funktionsbaugruppe bei einem eingeschlagenen Lenkwinkel des Bodeneingriffsmittels auf besonders einfache Art und Weise für Wartungsarbeiten zugänglich.

Erfindungsgemäss ist die Funktionsbaugruppe als eine Harnstoffpumpe ausgebildet sein. Eine Anordnung der Harnstoffpumpe in dem Radkasten ist besonders vorteilhaft, da durch die Verlagerung der Harnstoffpumpe aus dem in der Arbeitsmaschine vorhandenen Bauraum hinein in den Radkasten ein in der Arbeitsmaschine freiwerdender Bauraum für eine Vergrößerung eines Treibstofftanks nutzbar ist. Eine derartige Lösung ist wesentlich kostengünstiger, als eine Anordnung der Tankstruktur im Radkasten.

Gemäß einer Ausgestaltung kann der Kotflügel zumindest abschnittsweise als Harnstofftank ausgebildet sein. Aufgrund der räumlichen Nähe zu der vorzugsweise als Harnstoffpumpe ausgebildeten Funktionsbaugruppe ist eine derartige Ausgestaltung besonders vorteilhaft. Eine weitere vorteilhafte Weiterbildung sieht vor, dass die Funktionsbaugruppe als ein Reservoir zum Speichern eines Fluids ausgebildet ist.

Eine weitere vorteilhafte Ausgestaltung sieht vor, dass der Achskörper als Hinterachse der Arbeitsmaschine ausgebildet ist, wobei die Hinterachse eine Lenkachse ist. Hierbei ist bei einem eingelenkten Bodeneingriffsmittel die Funktionsbaugruppe für etwaige Wartungsarbeiten auf einfache Art und Weise, insbesondere werkzeuglos, zugänglich.

Vorzugsweise kann der Stauraum zumindest abschnittsweise von einer Abdeckung umgeben sein. Der Stauraum ist hierbei durch die Abdeckung begrenzt. Zugleich dient die Abdeckung zum Schutz der Funktionsbaugruppe. Hierbei kann die Abdeckung als ein Vorsprung an der Seitenwand ausgebildet sein. Weiterhin kann die Abdeckung einen im Wesentlichen konvexen Abschnitt umfassen, der sich axial in Hochrichtung der Arbeitsmaschine erstreckt und einen sich ausgehend von einem oberen Rand des im Wesentlichen konvexen Abschnitts in Hochrichtung hin zu der Seitenwand verjüngenden Abschnitt umfassen.

Besonders bevorzugt ist es, wenn an der Seitenwand eine Montageplatte angeordnet ist, wobei die Abdeckung lösbar, vorzugsweise mittels einer Schraubverbindung, an der Montageplatte angeordnet ist. Eine derartige Montageplatte ist besonders vorteilhaft zur Anordnung der Funktionsbaugruppe. Die Lösbare Anordnung der Abdeckung an der Montageplatte ist besonders vorteilhaft für Wartungsarbeiten an der Funktionsbaugruppe.

Ein Hauptrahmen der Arbeitsmaschine weist einen besonders stabilen Aufbau auf, sodass eine Anordnung der Montageplatte an dem Hauptrahmen besonders vorteilhaft ist. Vorzugsweise kann die Abdeckung oberhalb des Achskörpers angeordnet sein, sodass eine nach unten gerichtete Schwenkbewegung des Achskörpers nicht durch die Abdeckung begrenzt ist.

Vorzugsweise kann die Abdeckung außerhalb einer bei einem Lenkvorgang durch das Bodeneingriffsmittel überstreichbaren Fläche angeordnet sein, sodass ein maximal einstellbarer Lenkwinkel lediglich durch die Seitenwand räumlich begrenzt ist.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Darstellung eines Feldhäckslers,
- Figur 2: eine Seitenansicht eines Radkastens des Feldhäckslers,
- Figur 3: einen Querschnitt durch den Radkasten des Feldhäckslers,
- Figur 4: ein Bodeneingriffsmittel des Feldhäckslers in verschiedenen Stellungen in einer schematischen Draufsicht.

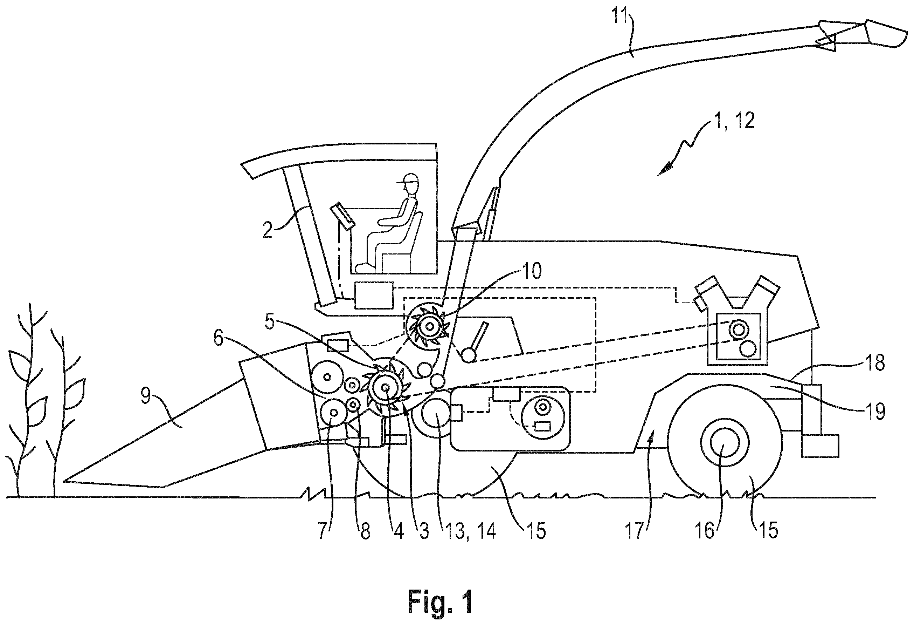

Fig. 1 zeigt eine schematische und exemplarische Darstellung einer als Feldhäcksler 1 ausgeführten landwirtschaftlichen Arbeitsmaschine 12. Die Karosserie des Feldhäckslers 1 ist in ihrem Vorderteil, unterhalb einer Fahrerkabine 2, aufgeschnitten dargestellt, um interne, Erntegut verarbeitende Baugruppen bzw. Arbeitsaggregate des Feldhäckslers 1 zeigen zu können. Eine dieser Baugruppen bzw. Arbeitsaggregate ist eine sogenannte Häckseltrommelbaugruppe 3 mit einer um eine sich in Fahrzeugquerrichtung erstreckende Rotationsachse 4 rotierende Häckseltrommel 5.

Der Häckseltrommelbaugruppe 3 ist eine Fördereinrichtung 6 für Erntegut vorgelagert. Die Fördereinrichtung 6 umfasst mehrere Walzenpaare 7, 8, die jeweils einen Spalt begrenzen und gegensinnig drehangetrieben sind, um das durch den Spalt hindurch geförderte Erntegut der Häckseltrommel 5 zuzuführen.

Die Fördereinrichtung 5 trägt wiederum einen in Anpassung an das aufzunehmende Erntegut austauschbaren Erntevorsatz 9.

In der Häckseltrommelbaugruppe 3 zerkleinertes Erntegut wird einem Nachbeschleuniger 10 zugeführt, der dem zerkleinerten Erntegut die nötige Geschwindigkeit verleiht, um einen Auswurfkrümmer 11 zu durchlaufen und in ein nicht dargestelltes Begleitfahrzeug übergeladen zu werden.

An einem als Vorderachse 13 ausgebildeten Achskörper 14 sind vordere Bodeneingriffsmittel 15 angeordnet. An einem als Hinterachse 16 ausgebildeten Achskörper 14 sind an gegenüberliegenden Seiten des Feldhäckslers 1 die hinteren Bodeneingriffsmittel 15 angeordnet. Die Bodeneingriffsmittel 15 sind als Räder ausgebildet. Die Hinterachse 16 ist als Lenkachse der Arbeitsmaschine 12 ausgebildet.

Ein an der Hinterachse 16 angeordnetes Bodeneingriffsmittel 15 ist in einem Radkasten 17 angeordnet. Der Radkasten 17 umfasst einen das Bodeneingriffsmittel 15 radial außenseitig abschnittsweise umschließenden Kotflügel 18 und eine Seitenwand 19. Die Seitenwand 19 befindet sich hinter dem Bodeneingriffsmittel 15. Die Seitenwand 19 erstreckt sich im Wesentlichen flächig in vertikaler Richtung.

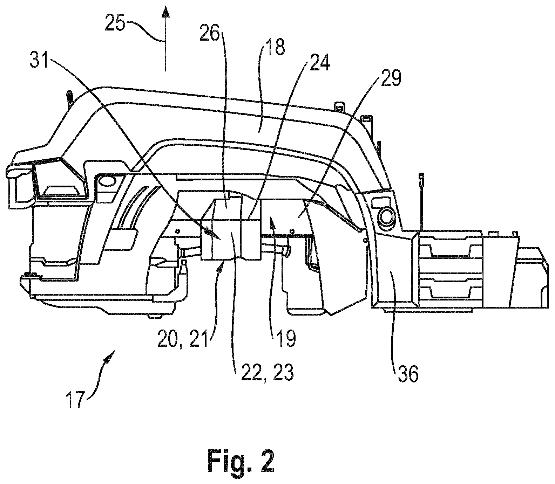

In Fig. 2 ist der Radkasten 17 in einer Seitenansicht näher dargestellt. An der Seitenwand 19 des Radkastens 17 ist ein Stauraum 20 mit einer in dem Stauraum 20 befindlichen Funktionsbaugruppe 21 angeordnet.

Der Stauraum 20 ist von einer Abdeckung 22 umgeben. Die Abdeckung bildet einen in axialer Richtung des Achskörpers 14 von der Seitenwand 19 vorstehenden Vorsprung 31. Der Vorsprung 31 bzw. die Abdeckung 22 befindet sich oberhalb des als Hinterachse 16 ausgebildeten Achskörpers 14. Die Abdeckung 22 begrenzt räumlich den Stauraum 20.

Hierbei besteht die Abdeckung 22 aus einem im Wesentlichen konvexen Abschnitt 23. Der im Wesentliche konvexe Abschnitt 23 besteht hier und vorzugsweise aus mehreren flächigen Abschnitten. In axialer Richtung erstreckt sich der im Wesentliche konvexe Abschnitt 23 in Hochrichtung 25 des Feldhäckslers 1. Der im Wesentlichen konvexe Abschnitt 23 ist nach oben offen ausgebildet, wobei sich an dem oberen Rand 24 des im Wesentlichen konvexen Abschnitts 23 ein sich hin zu der Seitenwand 19 verjüngender Abschnitt 26 angeordnet ist.

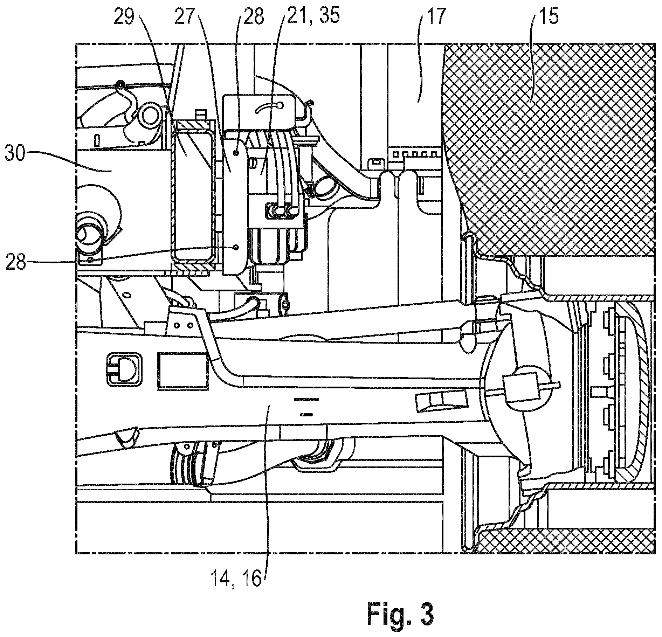

Fig. 3 zeigt einen Querschnitt durch den Radkasten 17. Die Abdeckung 22 ist in der Ansicht gemäß Fig. 3 ausgeblendet, sodass eine in dem von der Abdeckung 22 gebildeten Stauraum 20 angeordnete Funktionsbaugruppe 21 ersichtlich ist. Weiterhin ist eine Montageplatte 27 ersichtlich. Die Montageplatte 27 ist an der Seitenwand 19 des Radkasten 17 angeordnet. Die Montageplatte 27 ist zur Halterung der Funktionsbaugruppe 21 und der Abdeckung 22 vorgesehen und eingerichtet. Die Abdeckung 22 ist lösbar mittels einer Schraubverbindung an der Montageplatte 27 angeordnet. Für die Schraubverbindung umfasst die Montageplatte 27 eine Mehrzahl von Aussparungen 28.

Hier und vorzugsweise ist die Seitenwand 19 abschnittsweise von einem Hauptrahmen 29 gebildet. Der Hauptrahmen 29 erstreckt sich in Längsrichtung der Arbeitsmaschine 12, wobei an dem Hauptrahmen 29 Querstreben 30 zur Halterung der Vorderachse 13 und Hinterachse 16 angeordnet sind.

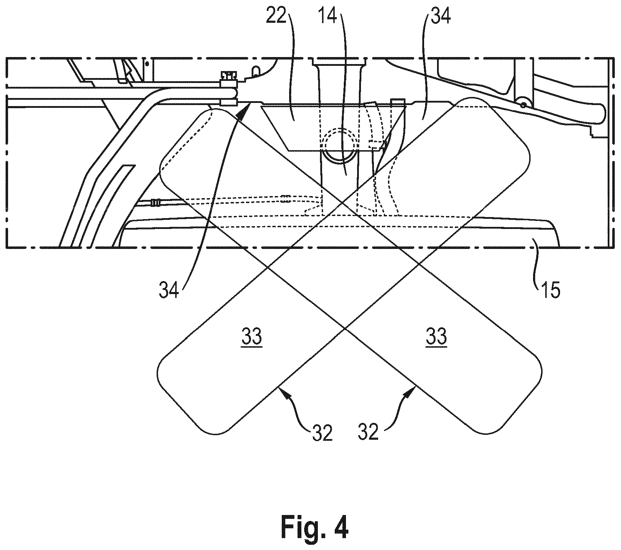

Fig. 4 zeigt das Bodeneingriffsmittel 15 mit dem Achskörper 14 sowie der Abdeckung 22 in einer Draufsicht. Ferner sind in Fig. 4 zwei Extremstellungen 32 des Bodeneingriffsmittels 15 abgebildet, welche den maximal einstellbaren Lenkeinschlag darstellen.

Die Abdeckung 22 ist außerhalb einer bei einem Lenkvorgang des Bodeneingriffsmittels 15 erreichbaren bzw. überstreichbaren Fläche 33 angeordnet. Mithin ist der maximal einstellbare Lenkwinkel lediglich durch die Seitenwand 19 räumlich begrenzt. Die den Stauraum 20 bildende Abdeckung 22 sowie die in diesem Stauraum 20 befindliche Funktionsbaugruppe 21 sind in einem zwischen den Extremstellungen 32 der Bodeneingriffsmittel 15 und der Seitenwand 19 befindliche Bereich 34 angeordnet.

Die Funktionsbaugruppe 21 ist als eine in Fig. 3 abgebildete Harnstoffpumpe 35 ausgebildet. Eine Anordnung der Harnstoffpumpe 35 in dem Bereich 34 ist besonders vorteilhaft, da durch die Verlagerung der Harnstoffpumpe 35 aus dem in der Arbeitsmaschine 12 vorhandenen Bauraum hinein in den Radkasten 17, der in der Arbeitsmaschine 12 freiwerdende Bauraum für eine Vergrößerung eines Treibstofftranks nutzbar ist. Eine derartige Lösung ist wesentlich kostengünstiger, als eine Anordnung der Tankstruktur im Radkasten.

Dennoch kann in einer alternativen Ausgestaltung die Funktionsbaugruppe 21 ebenfalls als ein hier nicht näher dargestelltes Reservoir zum Speichern eines Fluids, wie beispielsweise Kraftstoff oder Harnstoff, ausgebildet sein.

Besonders vorteilhaft ist es jedoch, wenn auf Grund der räumlichen Nähe die Funktionsbaugruppe 21 als Harnstoffpumpe 35 ausgebildet ist und zugleich, wie in Fig. 2 dargestellt, ein Harnstofftank 36 in den Kotflügel 18 integriert ist.

### Bezugszeichenliste:

| | | | |
|---|---|---|---|
| 1 | Feldhäcksler | 34 | Bereich |
| 2 | Fahrerkabine | 35 | Harnstoffpumpe |
| 3 | Häckseltrommelbaugruppe | 36 | Harnstofftank |
| 4 | Rotationsachse | | |
| 5 | Häckseltrommel | | |
| 6 | Fördereinrichtung | | |
| 7 | Walzenpaar | | |
| 8 | Walzenpaar | | |
| 9 | Erntevorsatz | | |
| 10 | Nachbeschleuniger | | |
| 11 | Auswurfkrümmer | | |
| 12 | Arbeitsmaschine | | |
| 13 | Vorderachse | | |
| 14 | Achskörper | | |
| 15 | Bodeneingriffsmittel | | |
| 16 | Hinterachse | | |
| 17 | Radkasten | | |
| 18 | Kotflügel | | |
| 19 | Seitenwand | | |
| 20 | Stauraum | | |
| 21 | Funktionsbaugruppe | | |
| 22 | Abdeckung | | |
| 23 | Konvexer Abschnitt | | |
| 24 | Rand | | |
| 25 | Hochrichtung | | |
| 26 | Verjüngender Abschnitt | | |
| 27 | Montageplatte | | |
| 28 | Aussparung | | |
| 29 | Hauptrahmen | | |
| 30 | Querstreben | | |
| 31 | Vorsprung | | |
| 32 | Extremstellung | | |
| 33 | Fläche | | |

## Patentansprüche

1. Landwirtschaftliche Arbeitsmaschine (12), insbesondere Feldhäcksler (1), umfassend
- einen Achskörper (14) mit zumindest einen an dem Achskörper (14) angeordneten Bodeneingriffsmittel (15),
- einen Radkasten (17) der einen das Bodeneingriffsmittel (15) radial außenseitig abschnittsweise umgebenden Kotflügel (18) und eine Seitenwand (19) umfasst, wobei an der Seitenwand (19) ein Stauraum (20) mit einer darin befindlichen Funktionsbaugruppe (21) angeordnet ist, **dadurch gekennzeichnet, dass** die Funktionsbaugruppe (21) als eine Harnstoffpumpe (35) ausgebildet ist.

2. Landwirtschaftliche Arbeitsmaschine (12) nach Anspruch 1, **dadurch gekennzeichnet, dass** die Funktionsbaugruppe (21) als ein Reservoir zum Speichern eines Fluids ausgebildet ist.

3. Landwirtschaftliche Arbeitsmaschine (12) nach einem der Ansprüche 1 bis 2, **dadurch gekennzeichnet, dass** der Kotflügel (18) zumindest abschnittsweise als Harnstofftank (36) ausgebildet ist.

4. Landwirtschaftliche Arbeitsmaschine (12) nach einem der Ansprüche 1 bis 3, **dadurch gekennzeichnet, dass** der Achskörper (14) als Hinterachse (16) der Arbeitsmaschine (12) ausgebildet ist, wobei die Hinterachse (16) eine Lenkachse ist.

5. Landwirtschaftliche Arbeitsmaschine (12) nach einem der Ansprüche 1 bis 4, **dadurch gekennzeichnet, dass** der Stauraum (20) zumindest abschnittsweise von einer Abdeckung (22) umgeben ist.

6. Landwirtschaftliche Arbeitsmaschine (12) nach Anspruch 5, **dadurch gekennzeichnet, dass** die Abdeckung (22) einen Vorsprung (31) an der Seitenwand (19) bildet.

7. Landwirtschaftliche Arbeitsmaschine (12) nach einem der Ansprüche 5 bis 6, **dadurch gekennzeichnet, dass** die Abdeckung (22) einen im Wesentlichen konvexen Abschnitt (23), der sich axial in Hochrichtung (25) der Arbeitsmaschine (12) erstreckt und einen sich ausgehend von einem oberen Rand (24) des im Wesentlichen konvexen Abschnitts (23) in Hochrichtung (25) hin zu der Seitenwand (19) verjüngenden Abschnitt (26) umfasst.

8. Landwirtschaftliche Arbeitsmaschine (12) nach einem der Ansprüche 5 bis 7, **dadurch gekennzeichnet, dass** an der Seitenwand (19) eine Montageplatte (27) angeordnet ist, wobei die Abdeckung (22) lösbar, vorzugsweise mittels einer Schraubverbindung, an der Montageplatte (27) angeordnet ist.

9. Landwirtschaftliche Arbeitsmaschine (12) nach Anspruch 8, **dadurch gekennzeichnet, dass** die Montageplatte (27) an einem Hauptrahmen (29) der Arbeitsmaschine (12) angeordnet ist.

10. Landwirtschaftliche Arbeitsmaschine (12) nach einem der Ansprüche 5 bis 9, **dadurch gekennzeichnet, dass** die Abdeckung (22) oberhalb des Achskörpers (14) angeordnet ist.

11. Landwirtschaftliche Arbeitsmaschine (12) nach einem der Ansprüche 5 bis 10, **dadurch gekennzeichnet, dass** die Abdeckung (22) außerhalb einer bei einem Lenkvorgang durch das Bodeneingriffsmittel (15) überstreichbaren Fläche (33) angeordnet ist, sodass vorzugsweise ein maximal einstellbarer Lenkwinkel lediglich durch die Seitenwand (19) räumlich begrenzt ist.

## Claims

1. Agricultural working machine (12), in particular a forage harvester (1), comprising
- an axle body (14), with at least one ground-engaging means (15) arranged on the axle body (14),
- a wheel box (17) comprising a fender (18), which partially surrounds the ground-engaging means (15) radially on the outside, and a side wall (19), wherein a storage space (20) with a functional assembly (21) located therein is arranged on the side wall (19), **characterized in that** the functional assembly (21) is designed as a urea pump (35).

2. Agricultural working machine (12) according to Claim 1, **characterized in that** the functional assembly (21) is designed as a reservoir for storing a fluid.

3. Agricultural working machine (12) according to either of Claims 1 and 2, **characterized in that** the fender (18) is designed at least in part as a urea tank (36).

4. Agricultural working machine (12) according to any one of Claims 1 to 3, **characterized in that** the axle body (14) is designed as a rear axle (16) of the working machine (12), wherein the rear axle (16) is a steering axle.

5. Agricultural working machine (12) according to any one of Claims 1 to 4, **characterized in that** the storage space (20) is surrounded at least in part by a cover (22).

6. Agricultural working machine (12) according to Claim 5, **characterized in that** the cover (22) forms a projection (31) on the side wall (19).

7. Agricultural working machine (12) according to either of Claims 5 and 6, **characterized in that** the cover (22) has a substantially convex portion (23) which extends axially in the vertical direction (25) of the working machine (12) and which comprises a portion (26) tapering from an upper edge (24) of the substantially convex portion (23) in the vertical direction (25) towards the side wall (19).

8. Agricultural working machine (12) according to any one of Claims 5 to 7, **characterized in that** a mounting plate (27) is arranged on the side wall (19), wherein the cover (22) is arranged on the mounting plate (27) releasably, preferably by means of a screw connection.

9. Agricultural working machine (12) according to Claim 8, **characterized in that** the mounting plate (27) is arranged on a main frame (29) of the working machine (12).

10. Agricultural working machine (12) according to any one of Claims 5 to 9, **characterized in that** the cover (22) is arranged above the axle body (14).

11. Agricultural working machine (12) according to any one of Claims 5 to 10, **characterized in that** the cover (22) is arranged outside a surface (33) that can be swept over by the ground-engaging means (15) during a steering operation, so that preferably a maximum adjustable steering angle is spatially limited only by the side wall (19).

## Revendications

1. Machine agricole (12), en particulier récolteuse-hacheuse-chargeuse (1), comprenant
- un corps d'essieu (14) avec au moins un moyen de prise au sol (15) disposé sur le corps d'essieu (14),
- un passage de roue (17) qui comporte une aile (18), entourant le moyen de prise au sol (15) par portions, radialement à l'extérieur, et une paroi latérale (19),
dans laquelle il est prévu, sur la paroi latérale (19), un espace (20) dans lequel se trouve un module fonctionnel (21), **caractérisée en ce que** le module fonctionnel (21) est réalisé sous la forme d'une pompe à urée (35).

2. Machine agricole (12) selon la revendication 1, **caractérisée en ce que** le module fonctionnel (21) est réalisé sous la forme d'un réservoir destiné à stocker un fluide.

3. Machine agricole (12) selon une des revendications 1 à 2, **caractérisée en ce que** l'aile (18) est réalisée au moins par portions sous la forme d'un réservoir d'urée (36).

4. Machine agricole (12) selon une des revendications 1 à 3, **caractérisée en ce que** le corps d'essieu (14) est réalisé sous la forme d'un essieu arrière (16) de la machine (12), sachant que l'essieu arrière (16) est un essieu directeur.

5. Machine agricole (12) selon une des revendications 1 à 4, **caractérisée en ce que** l'espace (20) est entouré d'un élément de recouvrement (22), au moins par portions.

6. Machine agricole (12) selon la revendication 5, **caractérisée en ce que** l'élément de recouvrement (22) forme une saillie (31) sur la paroi latérale (19).

7. Machine agricole (12) selon une des revendications 5 à 6, **caractérisée en ce que** l'élément de recouvrement (22) comprend une partie (23) sensiblement convexe, qui s'étend axialement dans le sens de la hauteur (25) de la machine (12), et une partie (26) qui rétrécit dans le sens de la hauteur (25), en direction de la paroi latérale (19), en partant d'un bord supérieur (24) de la partie (23) sensiblement convexe.

8. Machine agricole (12) selon une des revendications 5 à 7, **caractérisée en ce qu'**une plaque de montage (27) est disposée sur la paroi latérale (19), l'élément de recouvrement (22) étant installé de façon amovible, de préférence à l'aide d'une liaison à vis, sur la plaque de montage (27).

9. Machine agricole (12) selon la revendication 8, **caractérisée en ce que** la plaque de montage (27) est disposée sur un châssis principal (29) de la machine agricole (12).

10. Machine agricole (12) selon une des revendications 5 à 9, **caractérisée en ce que** l'élément de recouvrement (22) est disposé au-dessus du corps d'essieu (14).

11. Machine agricole (12) selon une des revendications 5 à 10, **caractérisée en ce que** l'élément de recouvrement (22) est disposé à l'extérieur d'une surface (33) pouvant être balayée par le moyen de prise au sol (15) lors d'une opération de braquage, de sorte que, de préférence, un angle de braquage maximal réglable est limité dans l'espace seulement par la paroi latérale (19).
